# EUROPEAN PATENT APPLICATION

(11) **EP 4 386 922 A1**
(43) Date of publication of application: **19.06.2024**
(21) Application number: 23205128.4
(22) Date of filing: 23.10.2023
(51) Int. Cl.: H01M 10/0525, H01M 50/103, H01M 10/54

(54) **LITHIUM ION SECONDARY BATTERY AND METHOD FOR DISASSEMBLING THE SAME**

(30) Priority: 13.12.2022 JP 2022198530
(71) Applicant: Prime Planet Energy & Solutions, Inc., Chuo-ku Tokyo 103-0022 (JP)
(72) Inventor: ITOH, Yusuke, Tokyo, 103-0022 (JP)
(74) Representative: Kuhnen & Wacker Patent- und Rechtsanwaltsbüro PartG mbB

(57) **Abstract**

Provided is a lithium ion secondary battery that facilitates cutting of a battery case without damage to an electrode body in disassembling the lithium ion secondary battery. A lithium ion secondary battery disclosed here includes an electrode body, an electrolyte, and a battery case housing the electrode body and the electrolyte. The battery case is provided with information on a cut position in disassembling the battery case.

## Description

### TECHNICAL FIELD

The present disclosure relates to a lithium ion secondary battery. The present disclosure also relates to a method for disassembling a lithium ion secondary battery.

### BACKGROUND ART

Recent lithium ion secondary batteries are suitably used for power supplies for driving vehicles and other applications. To utilize resources effectively with reduction of wastes, used lithium ion secondary batteries are collected and recycled. Patent Document 1, for example, describes that a used lithium ion secondary battery is first discharged in order to disassemble the lithium ion secondary battery with prevention of a short circuit between positive and negative electrodes caused by remaining charges. Patent Document 1 also describes that a battery case of the discharged lithium ion secondary battery is cut to be opened and an electrode body is taken out therefrom, and then, Ni and/or Co is collected from the positive electrode as a metal material including Ni and/or Co.

### CITATION LIST

### PATENT DOCUMENT

Patent Document 1: JP2020-198320A

### SUMMARY OF INVENTION

Through an intensive study, however, the inventor of the present disclosure has found the followings. Even if a lithium ion secondary battery is once discharged to 0 V, the voltage may return when the battery is left for a while, and it is difficult to discharge the battery to 0 V completely. In addition, collected lithium ion secondary batteries may include batteries unusable because of overcharge, overdischarge or the like. In such a case, since a safety device worked usually, discharge cannot be performed in some cases. On the other hand, the location of the electrode body cannot be determined from the outside of the battery case. Thus, in such cases as described above, the problem of a short circuit between positive and negative electrodes due to damage to the electrode body can occur in opening the battery case of the lithium ion secondary batteries by cutting. In view of this, a technique for facilitating cutting of a battery case without damage to an electrode body in disassembling a lithium ion secondary battery would be useful.

Embodiments of the present disclosure provide lithium ion secondary batteries each of which facilitates cutting of a battery case without damage to an electrode body in disassembly.

A lithium ion secondary battery disclosed here includes an electrode body, an electrolyte, and a battery case housing the electrode body and the electrolyte. The battery case is provided with information on a cut position in disassembling the battery case.

This configuration provides a lithium ion secondary battery that facilitates cutting of the battery case without damage to the electrode body in disassembly.

In another aspect, embodiments of the present disclosure provide a method for disassembling a lithium ion secondary battery including: preparing a lithium ion secondary battery, the lithium ion secondary battery including an electrode body, an electrolyte, and a battery case housing the electrode body and the electrolyte, the battery case being provided with information on a cut position in disassembling the lithium ion secondary battery; determining the cut position; and cutting the battery case at the cut position.

This configuration facilitates cutting of the battery case without damage to the electrode body in disassembling the lithium ion secondary battery.

### BRIEF DESCRIPTION OF THE DRAWINGS

FIG. 1 a perspective view schematically illustrating a lithium ion secondary battery according to a first embodiment.
FIG. 2 is a schematic longitudinal cross-sectional view taken along line II-II in FIG. 1.
FIG. 3 is a schematic disassembled view illustrating a configuration of an electrode body of the lithium ion secondary battery according to the first embodiment.
FIG. 4 is a schematic cross-sectional view for describing a cut position of the lithium ion secondary battery according to the first embodiment.
FIG. 5 is a perspective view schematically illustrating another example of a line indicating the cut position in the first embodiment.
FIG. 6 is a perspective view schematically illustrating yet another example of the line indicating the cut position in the first embodiment.
FIG. 7 is a schematic cross-sectional view for describing an example of a groove indicating a cut position of a lithium ion secondary battery according to a second embodiment.
FIG. 8 is a schematic cross-sectional view for describing another example of the groove indicating the cut position of the lithium ion secondary battery according to the second embodiment.
FIG. 9 is a schematic cross-sectional view for describing an example of a step indicating a cut position of a lithium ion secondary battery according to a third embodiment.
FIG. 10 is a schematic cross-sectional view for describing another example of the step indicating the cut position of the lithium ion secondary battery according to the third embodiment.
FIG. 11 is a perspective view schematically illustrating a lithium ion secondary battery according to a fourth embodiment.

### DESCRIPTION OF PREFERRED EMBODIMENTS

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not reflect actual dimensional relationships.

A "secondary battery" herein refers to a storage device enabling repetitive charging and discharging. A "lithium ion secondary battery" herein refers to a secondary battery that uses lithium ions as charge carriers and performs charge and discharge by movement of charges accompanying lithium ions between positive and negative electrodes.

### FIRST EMBODIMENT

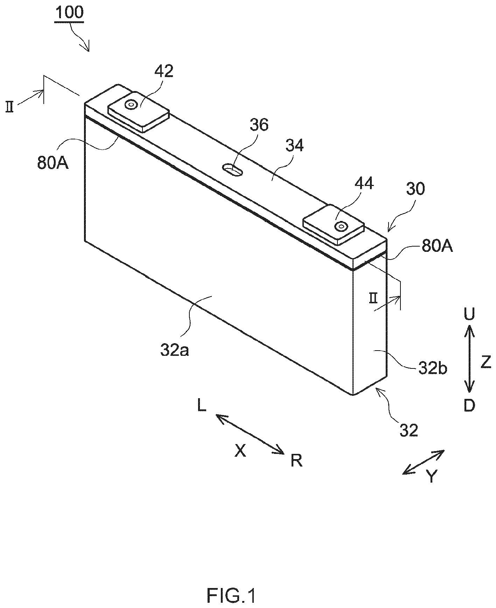

As an example of a lithium ion secondary battery disclosed here, a lithium ion secondary battery according to a first embodiment will be described with reference to FIGS. 1 through 6.

### <Schematic Configuration of Lithium Ion Secondary Battery>

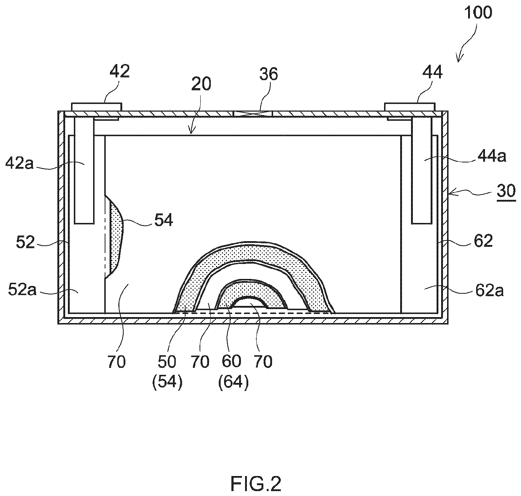

FIG. 1 is a perspective view of a lithium ion secondary battery 100. FIG. 2 is a schematic longitudinal cross-sectional view taken along line II-IIin FIG. 1. It should be noted that in the following example, characters L, R, U, and D in the drawings respectively represent left, right, up, and down, characters X, Y, and Z in the drawings respectively represent a long-side direction, a short-side direction orthogonal to the long-side direction, and a top-bottom direction, of the lithium ion secondary battery 100. It should be noted that these directions are defined simply for convenience of description, and do not limit the state of installation of the lithium ion secondary battery 100.

As illustrated in FIG. 2, the lithium ion secondary battery 100 is a rectangular sealed battery in which a flat electrode body 20 and a nonaqueous electrolyte (not shown) are housed in a battery case 30. The battery case 30 includes a positive electrode terminal 42 and a negative electrode terminal 44 for external connection. The battery case 30 also includes a thin safety valve 36 configured to release an internal pressure of the battery case 30 when the internal pressure increases to a predetermined level or more. The battery case 30 has an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a.

As illustrated in FIG. 1, the battery case 30 includes an outer case 32 housing the electrode body 20, and a lid 34 sealing an opening of the outer case 32. In this embodiment, the outer case 32 includes a bottom wall, a pair of opposed long walls 32a extending from the bottom wall, and a pair of opposed short walls 32b extending from the bottom wall. The outer case 32 and the lid 34 are sealed by welding such as laser welding. A material for the battery case 30 is, for example, a metal material that is lightweight and has high thermal conductivity, such as aluminium.

In this embodiment, the battery case 30 is rectangular. However, the shape of the battery case 30 is not limited to this example, and may be, for example, cylindrical. Alternatively, the battery case 30 may be a laminated case including a gas barrier layer such as an aluminum layer and a sealant layer including a thermoplastic resin, for example.

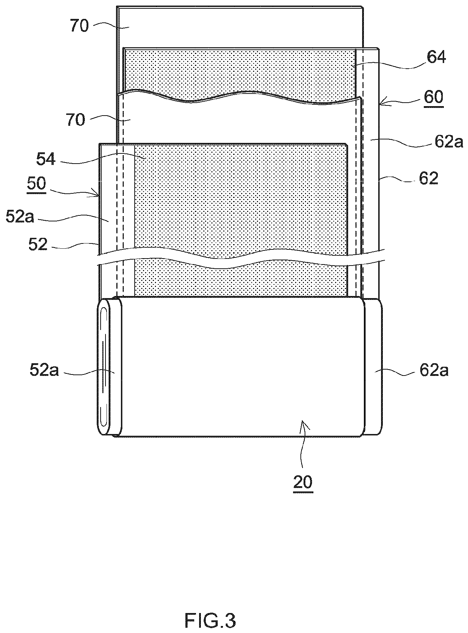

FIG. 3 is a disassembled view schematically illustrating a configuration of the electrode body 20 of the lithium ion secondary battery 100. In this embodiment, the electrode body 20 is a wound electrode body. The electrode body 20 is not limited to this, and may be a stacked-type electrode body in which a plurality of positive electrodes and a plurality of negative electrodes are alternately stacked with separators interposed therebetween.

As illustrated in FIGS. 2 and 3, in the wound electrode body 20, a long positive electrode sheet 50 and a long negative electrode sheet 60 are stacked with two long separator sheets 70 interposed therebetween and are wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) surface of a long negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a known positive electrode current collector for use in a lithium ion secondary battery, and examples of the positive electrode current collector 52 include aluminum foil.

The positive electrode active material layer 54 contains a positive electrode active material. Examples of the positive electrode active material include lithium composite metal oxides (e.g., lithium manganese composite oxide, lithium nickel manganese composite oxide, lithium nickel cobalt manganese composite oxide, and lithium nickel cobalt aluminium composite oxide), and lithium transition metal phosphate compounds (e.g., lithium iron phosphate). The positive electrode active material layer 54 may include a conductive material, a binder, and the like. Desired examples of the conductive material include carbon black such as acetylene black (AB) and carbon nanotubes. Examples of the binder include polyvinylidene fluoride (PVDF).

The negative electrode current collector 62 constituting the negative electrode sheet 60 may be a known negative electrode current collector for use in a lithium ion secondary battery, and examples of the negative electrode current collector 62 include copper foil.

The negative electrode active material layer 64 contains a negative electrode active material. The negative electrode active material can be, for example, graphite. The negative electrode active material layer 64 may include a binder, a thickener, and the like. Examples of the binder include styrene-butadiene rubber (SBR). Examples of the thickener include carboxymethyl cellulose (CMC).

Each separator 70 may be a known separator for use in a lithium ion secondary battery, and examples of the separator 70 include a porous sheet of a resin such as polyethylene

(PE) or polypropylene (PP). The porous sheet may have a single-layer structure or a multilayer structure. A heat-resistance layer (HRL) may be provided on a surface of each separator 70.

The nonaqueous electrolyte may be a known nonaqueous electrolyte for use in a lithium ion secondary battery, and typically contains a nonaqueous solvent and a supporting electrolyte (i.e., electrolyte salt). Examples of the nonaqueous solvent include carbonates, esters, and ethers. Examples of the supporting electrolyte include lithium salts such as LiPF₆. The nonaqueous electrolyte may include additives such as a gas generating agent, a film forming agent, a dispersant, and a thickener. It should be noted that although the nonaqueous electrolyte is used as an electrolyte in this embodiment, the electrolyte may be a solid electrolyte.

### information on Cut Position>

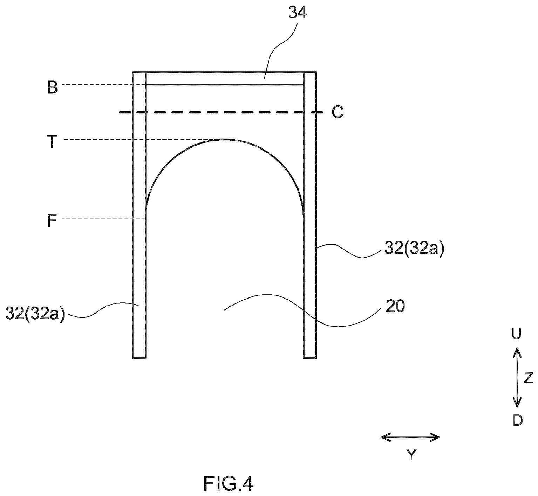

The lithium ion secondary battery 100 is provided with information on a cut position in disassembly. FIG. 4 is a schematic cross-sectional view of an upper portion of the lithium ion secondary battery 100 for showing a cut position. FIG. 4 is a cross-sectional view taken along the thickness direction of the electrode body 20 and is a cross-sectional view perpendicular to directions X shown in FIG. 1. In a cutting operation of the battery case 30, if there are remaining charges, damage to the electrode body 20 can cause a short circuit between the positive electrode 50 and the negative electrode 60. Thus, as illustrated in FIG. 4, the cut position is generally located between the lower surface of the lid 34 of the battery case 30 (i.e., position indicated by broken line B in FIG. 4) and the top of a flat portion of the electrode body 20 (i.e., position indicated by broken line F in FIG. 4). From the viewpoint of minimizing damage to the electrode body 20, the cut position is desirably located between the lower surface of the lid 34 of the battery case 30 (i.e., position indicated by broken line B in FIG. 4) and the top of the electrode body 20 (i.e., position indicated by broken line T in FIG. 4). Since the lower surface of the lid 34 and the electrode body 20 cannot be visually recognized from the outside of the battery case 30, it is difficult in conventional techniques to determine an accurate cut position in a short time.

In the first embodiment, information on the cut position is provided by placing a mark on the cut position. In the example illustrated in FIG. 1, a line 80A as a mark is printed on four surfaces of the battery case 30, that is, outer surfaces of the pair of long walls 32a and outer surfaces of the pair of short walls 32. Thus, the line 80A indicates the cut position. The line 80A is located at the position indicated by broken line C in FIG. 4. Thus, the line 80A is located between the position B at the lower surface of the lid 34 of the battery case 30 and the position F at the top of the flat portion of the electrode body 20. It should be noted that in the illustrated example, the line 80A is also located between the position B at the lower surface of the lid 34 and the position T at the top of the electrode body 20.

Thus, in disassembling the lithium ion secondary battery 100, damage to the electrode body 20 can be prevented by cutting the battery case 30 along the line 80A on the battery case 30. Accordingly, a short circuit between the positive electrode 50 and the negative electrode 60 can be avoided. In this manner, in disassembling the lithium ion secondary battery 100, the battery case 30 can be easily cut without damage to the electrode body 20.

In the example illustrating FIG. 1, the line 80A indicating the cut position as a mark is a solid line, but is not limited to this. The line 80A indicating the cut position may be a dashed line or a dashed-dotted line. Alternatively, two lines are printed on the battery case 30 and a cut position may be located between the two lines.

The line 80A indicating the cut position (i.e., mark) may be directly printed on the battery case 30 or provided on the battery case 30 by attaching a seal on which the line 80A indicating the cut position is printed. In a case where the battery case 30 is covered with a film or a film is attached to the battery case 30, the line 80A indicating the cut position may be provided by, for example, being printed on the film, or a seal on which the line 80A indicating the cut position is printed may be attached to the film. It should be noted that in a case where the film is transparent, the line 80A indicating the cut position may be directly provided on the battery case 30. In such a case, the line can also be recognized.

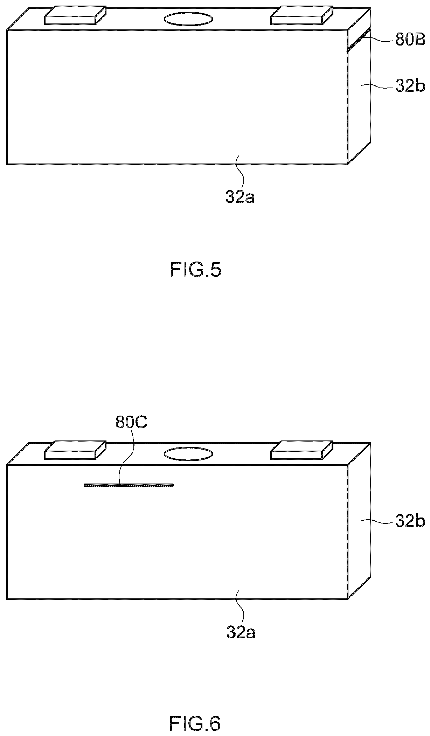

In the example illustrated in FIG. 1, the line 80A as a mark is provided on the four surfaces of the battery case 30. However, the mark only needs to be provided on at least one surface of the battery case 30. For example, as illustrated in FIG. 5, a line 80B may be provided only on one of the short walls 32b of the battery case 30.

In the example illustrated in FIG. 1, the line 80A is provided from one end to the other end on the surface. That is, the line 80A is provided on the entire cut position of the surface. Alternatively, the line 80A may be provided only on a portion of the surfaces of the battery case 30 (i.e., only on a portion of the cut position). For example, as illustrated in FIG. 6, a line 80C may be provided only on a portion of the long wall 32a of the battery case 30. When the battery case 30 is cut along the line 80B or the line 80C and then another portion of the battery case 30 is cut with the position kept in the directions Z, the battery case 30 can be easily cut without damage to the electrode body 20.

Alternatively, several marks such as dots may be placed on the cut position on the long wall 32a of the battery case 30. In this case, the battery case 30 is cut from one mark to its adjacent mark, and then, another portion of the battery case 30 is cut with the position kept in the directions Z. Thereby, the battery case 30 can be easily cut without damage to the electrode body 20.

### SECOND EMBODIMENT

A second embodiment is different from the first embodiment in that information on a cut position is provided by forming a groove at the cut position. This difference will be described below, and matters already described in the first embodiment will not be described again.

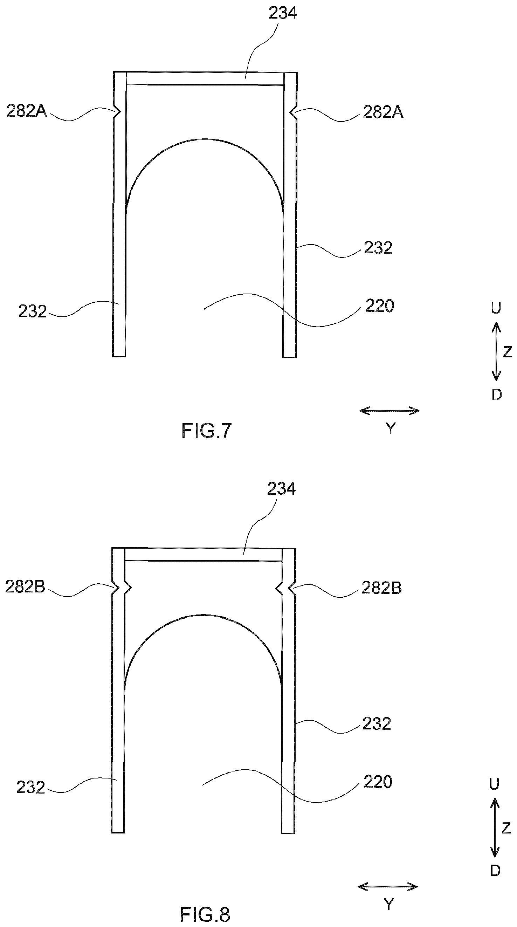

FIG. 7 is a cross-sectional view taken along a thickness direction of an electrode body, in a manner similar to FIG. 4. In the second embodiment, as illustrated in FIG. 7, a groove 282A is formed at a cut position of an outer case 232 of a battery case. Thus, the groove 282A is located between the lower surface of a lid 234 of the battery case and the top of a flat portion of an electrode body 220 in the directions Z. It should be noted that in the illustrated example, the groove 282A is also located between the lower surface of the lid 234 and the top of the electrode body 220.

Thus, in disassembling a lithium ion secondary battery, the battery case is cut along the groove 282A of the battery case so that damage to the electrode body can be thereby prevented. Accordingly, occurrence of a short circuit between positive and negative electrodes can be avoided. In this manner, in disassembling the lithium ion secondary battery, the battery case can be easily cut without damage to the electrode body.

The groove 282A is a recessed groove, and the outer case 232 is thin in the groove 282A. In this case, since the outer case 232 is thin at the cut position, cutting is easily performed.

The groove 282A is formed in at least one of four surfaces of the battery case. Thus, although the grooves 284A are formed in outer surfaces of a pair of long walls of the outer case 232 in the illustrated example, the groove 282A may be formed in one of the four surfaces of the battery case (e.g., the outer surface of one long wall) or may be formed in each of the four surfaces of the battery case (i.e., the outer surfaces of the pair of long walls and the outer surfaces of a pair of short walls).

The groove 282A may be formed from one end to the other end of the surface, or may be formed only in a portion of the surface. The battery case is cut along the partially provided groove 282A, and then another portion of the battery case is cut with the position kept in the directions Z (i.e., with the same height maintained) so that the battery case can be thereby easily cut without damage to the electrode body.

Although the groove 282A has a V-shaped cross section in the example illustrated in FIG. 7, the cross-sectional shape of the groove 282A is not limited to this. For example, the cross-sectional shape of the groove 282A may be a U shape or an inverted trapezoidal shape, for example. The groove 282A can serve as a guide for guiding a cutting blade to the cut position.

FIG. 8 illustrates another example of the groove formed at the cut position. In a manner similar to FIG. 4, FIG. 8 is a cross-sectional view taken along the thickness direction of the electrode body 220. In the example illustrated in FIG. 8, a groove 282B is provided at a cut position by bending the outer case 232. In this case, the thickness of the outer case 232 is uniform, which is advantageous in terms of strength of the battery case.

### THIRD EMBODIMENT

A third embodiment is different from the first embodiment in that information on a cut position is provided by forming a step at the cut position. This difference will be described below, and matters already described in the first embodiment will not be described again.

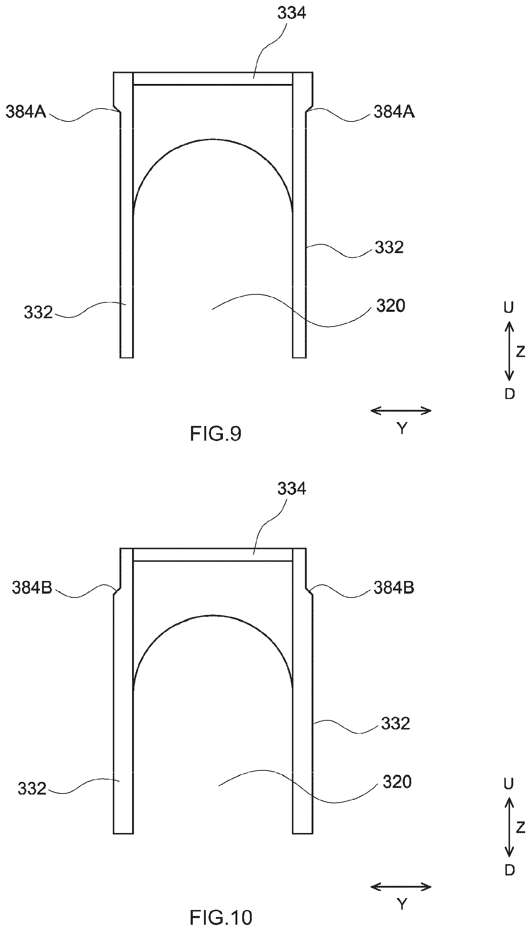

FIG. 9 is a cross-sectional view taken along the thickness direction of an electrode body, in a manner similar to FIG. 4. In the third embodiment, as illustrated in FIG. 9, a step 384A is formed at a cut position on an outer case 332 of a battery case. Thus, the step 384A is located between the lower surface of a lid 334 of the battery case and the top of a flat portion of an electrode body 320 in the directions Z. It should be noted that in the illustrated example, the step 384A is also located between the lower surface of the lid 334 and the top of the electrode body 320.

Thus, in disassembling a lithium ion secondary battery, the battery case is cut along the step 384A of the battery case so that damage to the electrode body can be thereby prevented. Accordingly, occurrence of a short circuit between positive and negative electrodes can be avoided. In this manner, in disassembling the lithium ion secondary battery, the battery case can be easily cut without damage to the electrode body.

The step 384A is formed in at least one of four surfaces of the battery case. Thus, although the steps 384A are formed on the outer surfaces of a pair of long walls of the outer case 332 in the illustrated example, the step 384A may be formed in one of the four surfaces of the battery case (e.g., the outer surface of one long wall) or may be formed in each of the battery case (i.e., the outer surfaces of the pair of long walls and the outer surfaces of a pair of short walls).

The step 384A may be formed from one end to the other end of the surface, or may be formed only in a portion of the surface. The battery case is cut along the partially provided step 384A, and then another portion of the battery case is cut with a position kept in the directions Z (i.e., with the same height maintained) so that the battery case can be thereby easily cut without damage to the electrode body.

The step 384A serves as a guide for guiding a cutting blade to the cut position.

In the example illustrated in FIG. 9, the step 384A is formed by increasing the thickness in upper portions of the long walls of the outer case 332 and reducing the thickness in lower portions of the longer walls of the outer case 332. However, the present disclosure is not limited to this, and a step 384B may be formed by reducing the thickness in upper portions of the long walls of the outer case 332 and increasing the thickness in lower portions of the long walls of the outer case 332, as shown in the example illustrated in FIG. 10.

### FOURTH EMBODIMENT

A fourth embodiment is different from the first embodiment in that information on a cut position is provided to a battery case in the form of a code or a signal. This difference will be described below, and matters already described in the first embodiment will not be described again.

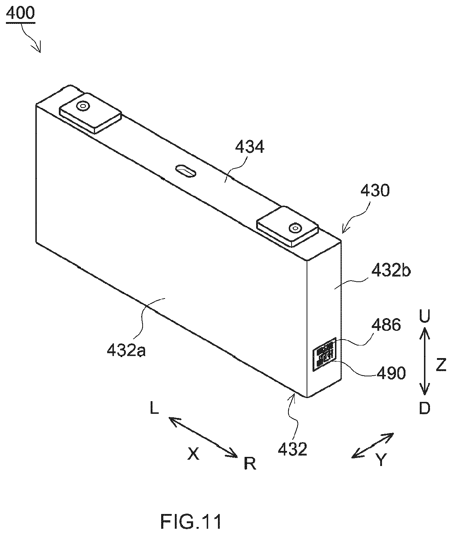

FIG. 11 illustrates a lithium ion secondary battery 400 as an example of the fourth embodiment. In the lithium ion secondary battery 400 illustrated in FIG. 11, a seal 490 on which a two-dimensional code 486 is printed is provided to a battery case 430. The two-dimensional code 486 is, for example, a QR code (registered trademark).

This code 486 includes information on a cut position. Thus, information on a cut position (e.g., information on how many millimeters below the upper surface of a lid 434 of the battery case 430 should be cut) can be obtained by reading the code 486. It should be noted that the cut position has already been described in the first embodiment.

In the illustrated example, the code 486 is provided to a lower portion of a short wall 432b of an outer case 432 of the battery case 430. The position to which the code 486 is provided may be any position on an exposed surface of the battery case 430. For example, the code 486 may be provided to the upper surface of the lid 434 of the battery case 430, or the bottom wall or a long wall 432a of the outer case 432 of the battery case 430. The code 486 may be provided to any position on these surfaces.

The fourth embodiment is advantageous in that a place to which the information on a cut position is provided is not limited as long as the place is on the exposed surface of the battery case 430. The fourth embodiment is also advantageous in automatically performing a cutting operation.

In the illustrated example, the two-dimensional code is used as the code 486 of the information on the cut position, but the type of the code 486 is not limited to this. The code 486 may be, for example, a character code or a one-dimensional code (e.g., bar code).

In the illustrated example, the code 486 is provided to the battery case 430 by the seal 490. The seal 490 is advantageous because the information on the cut position can be provided after completion of the lithium ion secondary battery 400. However, the code 486 may be directly printed on the battery case 430 or engraved in the battery case 430. It should be noted that the "seal" herein is a term including a "decal" and a "label."

The information on the cut position may be in the form of a signal. In this case, a wireless tag such as a RFID tag can be used and thus, wireless tag is attached to the battery case 430, for example.

In disassembling the lithium ion secondary battery 400, the code 486 is read, and based on the obtained information on the cut position, the battery case 430 is cut, whereby damage to an electrode body can be prevented. Accordingly, occurrence of a short circuit between positive and negative electrodes can be avoided. In this manner, in disassembling the lithium ion secondary battery 400, the battery case 430 can be easily cut without damage to the electrode body.

### <Method for Disassembling Lithium Ion Secondary Battery>

Next, an embodiment of a method for disassembling a lithium ion secondary battery disclosed here will be described in detail with reference to the lithium ion secondary batteries according to the first through fourth embodiments. A method for disassembling a lithium ion secondary battery according to this embodiment includes: the step S101 of preparing a lithium ion secondary battery where the lithium ion secondary battery includes an electrode body, an electrolyte, and a battery case housing the electrode body and the electrolyte and the battery case is provided with information on a cut position in disassembling the lithium ion secondary battery (battery preparation step); the step S 102 of determining the cut position (cut position determination step); and the step S103 of cutting the battery case at the cut position (cutting step).

### (Battery Preparation Step S101)

The lithium ion secondary battery according to one of the first through fourth embodiments is prepared. The lithium ion secondary battery is typically a used lithium ion secondary battery, especially a lithium ion secondary battery used as a vehicle onboard battery, but the present disclosure is not limited to these. For example, the lithium ion secondary battery may be an unused lithium ion secondary battery in which a failure was found before shipment.

### (Cut Position Determination Step S102)

Cut position determination step S 102 can be performed by a known method in accordance with forms of the provided information on the cut position. For example, in a case where information on a cut position is provided to the battery case by placing a mark on the cut position as described in the first embodiment, the cut position can be determined by using a camera or a sensor that can recognize an image of the mark. For example, in a case where information on a cut position is provided to the battery case as a groove or a step as described in the second embodiment or the third embodiment, the cut position can be determined by using a displacement sensor or the like. For example, in a case where a code or a RFID of information on a cut position is provided to the battery case as described in the fourth embodiment, the cut position can be determined by reading the code or the RFID with a reading device such as a reader. In the cases of the first embodiment, the second embodiment, and the third embodiment, the cut position can also be determined by visual observation.

### (Cutting step S103)

In cutting step S103, cutting of the battery case can be performed by a known method. For example, the cutting can be performed with a cutter such as a tool with a cutting blade (e.g., electric saw), an electric cutting tool (e.g., grinder or Leutor), a water cutter, or a laser cutter. From the viewpoint of suppressing heat generation in a cut portion, for example, the use of the water cutter is advantageous. In cut position determination step S 102 and cutting step S103, it is advantageous from the viewpoint of higher accuracy that a reader (e.g., the camera or the sensor described above) and the cutter are connected to a computer and made coordinated with each other so that these steps are automatically performed.

With the method of disassembling a lithium ion secondary battery according to this embodiment, the battery case can be easily cut without damage to the electrode body in disassembling the lithium ion secondary battery.

As described in the second embodiment and the third embodiment, the groove or the step at the cut position can serve as a guide for guiding to the cut position. Thus, in this case, from the viewpoint of cutting accuracy, it is advantageous to use a cutting blade in cutting step S103.

Specific examples of the present disclosure have been described in detail hereinbefore, but are merely illustrative examples, and are not intended to limit the scope of claims. The techniques described in claims include various modifications and changes of the above exemplified specific examples.

That is, a lithium ion secondary battery and a method for disassembling a lithium ion secondary battery are items [1] to [6]:
[1] A lithium ion secondary battery including:
   an electrode body;
   an electrolyte; and
   a battery case housing the electrode body and the electrolyte, wherein
   the battery case is provided with information on a cut position in disassembling the battery case.
[2] The lithium ion secondary battery of item [1] in which the information on the cut position is provided by placing a mark on the cut position.
[3] The lithium ion secondary battery of item [1] in which the information on the cut position is provided by forming a groove at the cut position.
[4] The lithium ion secondary battery of item [1] in which the information on the cut position is provided by forming a step at the cut position.
[5] The lithium ion secondary battery of item [1] in which the battery case is provided with the information on the cut position in a form of a code or a signal.
[6] A method for disassembling a lithium ion secondary battery.
   preparing a lithium ion secondary battery, the lithium ion secondary battery including an electrode body, an electrolyte, and a battery case housing the electrode body and the electrolyte, the battery case being provided with information on a cut position in disassembling the lithium ion secondary battery;
   determining the cut position; and
   cutting the battery case at the cut position.

## Claims

1. A lithium ion secondary battery (100, 400) comprising:
an electrode body (20, 220, 320);
an electrolyte; and
a battery case (30, 430) housing the electrode body (20, 220, 320) and the electrolyte, wherein
the battery case (30, 430) is provided with information on a cut position in disassembling the battery case (30, 430).

2. The lithium ion secondary battery (100) according to claim 1, wherein the information on the cut position is provided by placing a mark on the cut position.

3. The lithium ion secondary battery according to claim 1, wherein the information on the cut position is provided by forming a groove (282A, 282B) at the cut position.

4. The lithium ion secondary battery according to claim 1, wherein the information on the cut position is provided by forming a step (384A, 384B) at the cut position.

5. The lithium ion secondary battery (400) according to claim 1, wherein the battery case (430) is provided with the information on the cut position in a form of a code or a signal.

6. A method for disassembling a lithium ion secondary battery (100, 400), the method comprising:
preparing a lithium ion secondary battery (100, 400), the lithium ion secondary battery (100, 400) including an electrode body (20, 220, 320), an electrolyte, and a battery case (30, 430) housing the electrode body (20, 220, 320) and the electrolyte, the battery case (30, 430) being provided with information on a cut position in disassembling the lithium ion secondary battery (100, 400);
determining the cut position; and
cutting the battery case (30, 430) at the cut position.
